(19) Europäisches Patentamt / European Patent Office / Office européen des brevets

(11) **EP 2 747 564 B1**

(12) **EUROPEAN PATENT SPECIFICATION**

(45) Date of publication and mention of the grant of the patent:
**01.04.2015 Bulletin 2015/14**

(21) Application number: **12748471.5**

(22) Date of filing: **20.08.2012**

(51) Int Cl.:
***A01N 43/10*** *(2006.01)* ***A01N 43/56*** *(2006.01)*
***A01N 37/20*** *(2006.01)* ***A01P 13/00*** *(2006.01)*

(86) International application number:
**PCT/EP2012/066158**

(87) International publication number:
**WO 2013/026811 (28.02.2013 Gazette 2013/09)**

(54) **HERBICIDAL COMPOSITIONS COMPRISING CHLOROACETAMIDES**

HERBIZIDZUSAMMENSETZUNGEN MIT CHLORACETAMIDEN

COMPOSITIONS HERBICIDES COMPORTANT DES CHLOROACETAMIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.08.2011 EP 11178808**

(43) Date of publication of application:
**02.07.2014 Bulletin 2014/27**

(73) Proprietor: **BASF SE**
**67056 Ludwigshafen (DE)**

(72) Inventors:
- **BREMER, Hagen**
  **67346 Speyer (DE)**
- **KEHLER, Ron**
  **69123 Heidelberg (DE)**

(56) References cited:
**EP-A1- 0 206 251** **EP-A2- 2 280 602**
**WO-A1-2005/015999** **CH-A5- 581 426**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 747 564 B1

## Description

The present invention relates to herbicidal compositions comprising the chloroacetamides metazachlor, dimethenamid and pethoxamid, and optionally at least one further herbicidal compound and optionally a herbicide safener compound. The present invention also relates to the use of these compositions for controlling undesirable vegetation, in particular in crops.

Background of the invention

In crop protection, it is principally desirable to increase the specificity and the reliability of the action of active compounds. In particular, it is desirable for the crop protection product to control the harmful plants effectively and, at the same time, to be tolerated by the useful plants in question.

Metazachlor (common name for 2-chloro-*N*-(2,6-dimethylphenyl)-*N*-(1*H*-pyrazol-1-ylmethyl)acetamide) is a well known crystalline herbicide,

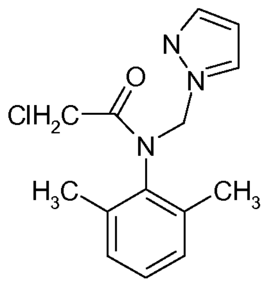

metazachlor

which exists in different polymorphic forms. The thermodynamically most stable one is the monoclinic form which is known from EP 411408. The polymorphs are further described in U. J. Griesser, D. Weigand, J. M. Rollinger, M. Haddow, E. Gstrein, J. Therm. Anal. Calorim., 77 (2004) 511 and D. Weigand, Ph.D. thesis, Innsbruck, 2001. In the context of the present invention, metazachlor is to be understood as meaning 2-chloro-*N*-(2,6-dimethylphenyl)-*N*-(1*H*-pyrazol-1-ylmethyl)acetamide in all its crystal modifications, in particular in its triclinic and monoclinic form.

Metazachlor is primarily applied for controlling undesirable vegetation in oilseed rape and vegetable crops.

The chloroacetamide herbicide known as dimethenamid (common name for (RS)-2-chloro-*N*-(2,4-dimethyl-3-thienyl)-*N*-(2-methoxy-1-methylethyl)acetamide) has been found to be a very effective herbicide with broad general activity against a wide variety of undesirable weed species.

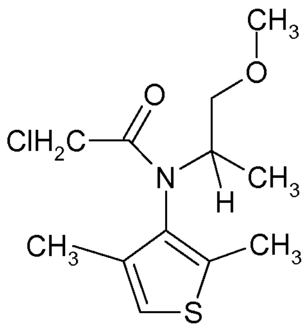

dimethenamid

Chloroacetamides and particularly thiophene based chloroacetamides including dimethenamid are disclosed in U.S. Pat. No. 4,666,502. Additionally, the (S) optical isomer of dimethenamid (dimethenamid-P) is disclosed in U.S. Pat. No. 5,457,085.

Dimethenamid consists of 4 stereoisomers due to two chiral elements and can thus also exist in the form of the individual isomers as diastereomeric mixtures (1 S, aRS (known as S-dimethenamid or dimethenamid-P) and 1 R, aRS (known as R-dimethenamid)) and as a racemic mixture (1 RS, aRS). References herein to dimethenamid refer to its various forms unless otherwise stated. Of the diastereomeric mixtures, dimethenamid-P is preferred.

Although selective in many major crops, in certain specific crops dimethenamid has been found to adversely effect or interfere with the culture of the desirable crop species.

The chloroacetamide pethoxamid (common name for 2-chloro-*N*-(2-ethoxyethyl)-*N*-(2-methyl-1-phenyl-1-propenyl)acetamide) is described in EP206251.

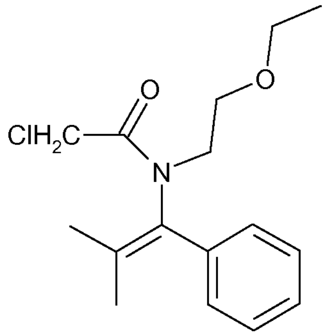

pethoxamid

The compound is commonly applied in maize and soy.

Mixtures of two chloroacetamides are known in the art. EP 1 810 570 discloses that mixtures comprising dimethenamid and metazachlor provide improved weed control in comparison to the individual compounds.

Storage stable herbicidal 3-way mixtures comprising two chloroacetamides, dimethenamid and metazachlor, and in addition the isoxazolidinone clomazone or the quinolinecarboxylic acid quinmerac are known from EP 1 656 021.

EP 2 280 602 (WO 2009/133083) also discloses a 3-way mixture, comprising metazachlor, dimethenamid and quinmerac, that provides a synergistic herbicidal effect.

Summary of the invention

It is an object of the present invention to provide herbicidal compositions, which show enhanced herbicide action against undesirable harmful plants and/or have improved compatibility with crop plants.

In particular, it is an object of the present invention to provide herbicidal compositions, which provide weed control comparable to the individual compounds with significantly reduced application rates. It is also an object of the present invention to provide herbicidal compositions, which provide significantly enhanced weed control with application rates comparable to those of the individual compounds.

Furthermore, it an object of the present invention to provide herbicidal compositions, which maintain or improve the level of weed control, while showing less damage in the cultured crop in comparison to the individual compounds.

We have found that these and further objects are achieved, surprisingly, by herbicidally active compositions comprising

a) a herbicide compound A, which is metazachlor; and

b) a second herbicide compound B, which is dimethenamid; and

c) a third herbicide compound C, which is pethoxamid.

In a preferred embodiment, the herbicidally active compositions comprise

a) a herbicide compound A, which is metazachlor; and

b) a second herbicide compound B, which is dimethenamid-P; and

c) a third herbicide compound C, which is pethoxamid.

In another preferred embodiment, the herbicidally active compositions comprise

a) a herbicide compound A, which is metazachlor in its monoclinic form; and

b) a second herbicide compound B, which is dimethenamid-P; and

c) a third herbicide compound C, which is pethoxamid.

The composition of the invention may additionally comprise a further herbicide compound D, which is different from the herbicide compounds A, B and C.

The composition of the invention may further comprise a herbicide safener compound E.

The invention furthermore relates to the use of a composition as defined herein for controlling undesirable vegetation in crops and non-crop areas, preferably in crops. When using the compositions of the invention for this purpose, the herbicide compound A (metazachlor), the herbicide compound B (dimethenamid), the herbicide compound C (pethoxamid) and, if present, the further herbicide compound D (as defined hereinafter) and/or the herbicide safener compound E (as defined hereinafter) can be applied simultaneously or in succession to the areas, where undesirable vegetation occurs or may occur. The compounds A, B, and C and optionally D and/or E are in particular applied in crops, where undesirable vegetation may occur.

The invention furthermore relates to the use of a composition as defined herein for controlling undesirable vegetation in crops which, by genetic engineering or by breeding, are resistant to one or more herbicides and/or pathogens such as harmful fungi, and/or to attack by insects; preferably resistant to one or more of the following synthetic herbicides: 4-HPPD inhibitor herbicides, ACCase inhibitor herbicides, one or more of the herbicide compounds D mentioned below, namely against inhibitors of photosynthesis, in particular inhibitors of photosynthesis at photosystem II, against inhibitors of protoporphyrinogen-IX-oxidase, against acetolactate synthase (ALS) inhibitors, in particular imidazolinones, against bleacher herbicides or against auxinic herbicides.

The invention furthermore relates to a method for controlling undesirable vegetation, which comprises applying a herbicidal composition according to the present invention to the undesirable plants. Application can be done pre-sowing, pre-emergence, during emergence and/or post-emergence of the undesirable plants. In a preferred embodiment, the composition according to the invention is applied pre-emergence. According to another preferred embodiment, the composition according to the invention is applied post-emergence, in particular early-post-emergence.

The herbicide compound A (metazachlor), the herbicide compound B (dimethenamid), the herbicide compound C (pethoxamid) and, if present, the further herbicide compound D and/or the herbicide safener component E can be applied simultaneously or in succession.

The invention in particular relates to a method for controlling undesirable vegetation in crops, which comprises applying an herbicidal composition according to the present invention in crops where undesirable vegetation occurs or might occur.

The invention furthermore relates to a method for controlling undesirable vegetation, which comprises allowing a composition according to the present invention to act on plants, their habitat or on seed.

In the methods of the present invention it is immaterial whether the herbicide compound A (metazachlor), the herbicide compound B (dimethenamid), the herbicide compound C (pethoxamid) and, if present, the further herbicide compound D and/or the herbicide safener component E are formulated and applied jointly or separately. In the case of separate application it is of minor importance, in which order the application takes place. It is only necessary, that the herbicide compound A, the herbicide compound B, the herbicide compound C and, if present, the further herbicide compound D and/or the herbicide safener component E are applied in a time frame that allows simultaneous action of the active ingredients on the plants, preferably within a time-frame of at most 14 days, in particular at most 7 days.

The invention also relates to an herbicide formulation, which comprises a herbicidally active composition as defined herein and at least one carrier material, including liquid and/or solid carrier materials.

Detailed description of the invention

Surprisingly, the compositions according to the present invention have better herbicidal activity against harmful plants than would have been expected by the herbicidal activity of the individual compounds and even in view of the known mixture of two chloroacetamides, i.e. metazachlor and dimethenamid. In other words, the joint action of metazachlor, dimethenamid and pethoxamid results in a further unexpectedly enhanced activity against harmful plants in the sense of a synergy effect (synergism or potentiation), even at low application rates of metazachlor. For this reason, the compositions can, based on the individual components, be used at lower application rates to achieve an herbicidal effect comparable to the individual components or the binary mixture. In addition, weed control through application of the compositions according to the present invention causes less crop damage than the application of equivalent amounts of the individual compounds.

Moreover, the compositions of the present invention provide good pre-sowing as well as good pre- and post-emergence herbicidal activity; in particular, the compositions are useful for combating/controlling harmful plants after their emergence (post-emergence), preferably early post-emergence of the plant. According to a preferred embodiment, the compositions according to the present invention are applied up to the 2 true leave stage (GS12) of the plant, preferably up to the 1-2 true leaf stage.

As used herein, the terms "controlling" and "combating" are synonyms.

As used herein, the terms "undesirable vegetation" and "harmful plants" are synonyms.

The compositions of the invention may contain metazachlor in its monoclinic or triclinic form or as mixtures thereof, preferably in the monoclinic form.

The compositions of the invention may contain (*RS*)-2-chloro-*N*-(2,4-dimethyl-3-thienyl)-*N*-(2-methoxy-1-methylethyl)acetamide (dimethenamid), preferably (S)-2-chloro-*N*-(2,4-dimethyl-3-thienyl)-*N*-(2-methoxy-1-methylethyl)acetamide (dimethenamid-P).

If the compounds mentioned as herbicide compounds D and safeners E have functional groups, which can be ionized, they can also be used in the form of their agriculturally acceptable salts.

In general, the salts of those cations are suitable whose cations have no adverse effect on the action of the active compounds ("agriculturally acceptable").

Preferred cations are the ions of the alkali metals, preferably of lithium, sodium and potassium, of the alkaline earth metals, preferably of calcium and magnesium, and of the transition metals, preferably of manganese, copper, zinc and iron, furthermore ammonium and substituted ammonium (hereinafter also termed as organoammonium) in which one to four hydrogen atoms are replaced by $C_1$-$C_8$-alkyl, $C_1$-$C_4$-alkyl, hydroxy-$C_1$-$C_4$-alkyl, in particular hydroxy-$C_2$-$C_4$-alkyl, $C_1$-$C_4$-alkoxy-$C_1$-$C_4$-alkyl, in particular $C_1$-$C_4$-alkoxy-$C_2$-$C_4$-alkyl, hydroxy-$C_1$-$C_4$-alkoxy-$C_1$-$C_4$-alkyl, in particular hydroxy-$C_2$-$C_4$-alkoxy-$C_2$-$C_4$-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, pentylammonium, hexylammonium, heptylammonium, 2-hydroxyethylammonium (olamine salt), 2-(2-hydroxyethoxy)eth-1-ylammonium (diglycolamine salt), di(2-hydroxyeth-1-yl)ammonium (= diethanolammonium salt or diolamine salt), tri(2-hydroxyethyl)ammonium (= triethanolammonium salt or trolamine salt), mono-, di- and tri(hydroxypropyl)ammonium (= mono-, di- and tripropanolammonium), benzyltrimethylammonium, benzyltriethylammonium, furthermore phosphonium ions, sulfonium ions, preferably tri($C_1$-$C_4$-alkyl)sulfonium such as trimethylsulfonium, and sulfoxonium ions, preferably tri($C_1$-$C_4$-alkyl)sulfoxonium.

In the compositions according to the invention, the compounds that carry a carboxyl group can also be employed in the form of agriculturally acceptable derivatives, for example as amides such as mono- or di-$C_1$-$C_6$-alkylamides or arylamides, as esters, for example as allyl esters, propargyl esters, $C_1$-$C_{10}$-alkyl esters or alkoxyalkyl esters, and also as thioesters, for example as $C_1$-$C_{10}$-alkyl thioesters. Preferred mono- and di-$C_1$-$C_6$-alkylamides are the methyl- and the dimethylamides. Preferred arylamides are, for example, the anilidines and the 2-chloroanilides. Preferred alkyl esters are, for example, the methyl, ethyl, propyl, isopropyl, butyl, isobutyl, pentyl, mexyl (1-methylhexyl) or isooctyl (2-ethylhexyl) esters. Preferred $C_1$-$C_4$-alkoxy-$C_1$-$C_4$-alkyl esters are the straight-chain or branched $C_1$-$C_4$-alkoxyethyl esters, for example the methoxyethyl, ethoxyethyl or butoxyethyl (butoyl) esters. An example of the straight-chain or branched $C_1$-$C_{10}$-alkyl thioesters is the ethyl thioester. Preferred derivatives are the esters.

In the compositions of the present invention the relative weight ratio of herbicide compound A (metazachlor) to herbicide compound B (dimethenamid) is in general in the range from 20:1 to 1:20, preferably in the range from 10:1 to 1:10, most preferably from 4:1 to 1:1. Accordingly, in the methods and uses of the invention, metazachlor and dimethenamid are preferably applied within these weight ratios.

In the compositions of the present invention the relative weight ratio of herbicide compound A (metazachlor) to herbicide compound C (pethoxamid) is in general in the range from 20:1 to 1:20, preferably in the range from 10:1 to 1:10, most preferably from 4:1 to 1:1. Accordingly, in the methods and uses of the invention, metazachlor and pethoxamid are preferably applied within these weight ratios.

If the compositions of the invention comprise a further herbicide component D, the relative weight ratio of herbicide compound A (metazachlor) to the total amount of herbicide compounds B, C and D, is in general from 1000:1 to 1:1000, preferably from 200:1 to 1:200, most, preferably from 1:1-1:50, wherein each herbicide compound D, which is an ester or a salt of an acid is calculated as the acid. In these compositions, the weight ratio of herbicide compound B (dimethenamid) to herbicide compound D is in general from 1000:1 to 1:1000, preferably from 200:1 to 1:200, most, preferably from 1:1-1:50. In this embodiment the weight ratio of herbicide A and safener E is as defined below. Accordingly, in the methods and uses of the invention, metazachlor, dimethenamid and pethoxamid and the herbicide compounds D and safener E are preferably applied within these weight ratios.

In addition to the herbicide compound A, B and C and the optional safener E, the composition of the invention may contain one or more further herbicide compounds D. These further herbicide compounds D are usually selected from the following groups d1 to d14:

d1) from the group of the lipid biosynthesis inhibitors:

clethodim, clodinafop-propargyl, cycloxydim, cyhalofop-butyl, diclofop-methyl, fenoxaprop-P-ethyl, fluazifop-P-butyl, haloxyfop-P-methyl, metamifop, pinoxaden, profoxydim, propaquizafop, quizalofop-P-ethyl, quizalofop-P-tefuryl, sethoxydim, tepraloxydim, tralkoxydim, benfuresate, dimepiperate, EPTC, esprocarb, ethofumesate, molinate, orbencarb, prosulfocarb, thiobencarb and triallate;

d2) from the group of the acetolactate synthase (ALS) inhibitors:

amidosulfuron, azimsulfuron, bensulfuron-methyl, bispyribac-sodium, chlorimuronethyl, chlorsulfuron, cloransulam-methyl, cyclosulfamuron, diclosulam, ethametsulfuron-methyl, ethoxysulfuron, flazasulfuron, florasulam, flucarbazone-sodium, flucetosulfuron, flumetsulam, flupyrsulfuron-methyl-sodium, foramsulfuron, halosulfuron-methyl, imazamethabenz-methyl, imazamox, imazapic, imazapyr, imazaquin, imazethapyr, imazosulfuron, iodosulfuron, iodosulfuron-methyl-sodium, mesosulfuron, metazosulfuron, metosulam, metsulfuron-methyl, nicosulfuron, orthosulfamuron, oxasulfuron, penoxsulam, primisulfuron-methyl, propoxycarbazon-sodium, propyrisulfuron, prosulfuron, pyrazosulfuron-ethyl, pyribenzoxim, pyrimisulfan, pyriftalid, pyriminobac-methyl, pyrithiobac-sodium, pyroxsulam, rimsulfuron, sulfometuron-methyl, sulfosulfuron, thiencarbazone-methyl, thifensulfuron-methyl, triasulfuron, tribenuron-methyl, trifloxysulfuron, triflusulfuron-methyl, tritosulfuron and triafamone;

d3) from the group of the photosynthesis inhibitors:

ametryn, amicarbazone, atrazine, bentazone, bentazone-sodium, bromoxynil and its salts and esters, chloridazone, chlorotoluron, cyanazine, desmedipham, diquat-dibromide, diuron, fluometuron, hexazinone, ioxynil and its salts and esters, isoproturon, lenacil, linuron, metamitron, methabenzthiazuron, metribuzin, paraquat, paraquat-dichloride, phenmedipham, propanil, pyridate, simazine, terbutryn, terbuthylazine and thidiazuron;

d4) from the group of the protoporphyrinogen-IX oxidase inhibitors:

acifluorfen-sodium, bencarbazone, benzfendizone, butafenacil, carfentrazone-ethyl, cinidon-ethyl, flufenpyr-ethyl, flumiclorac-pentyl, flumioxazin, fluoroglycofen-ethyl, fomesafen, lactofen, oxadiargyl, oxadiazon, oxyfluorfen, pentoxazone, pyraflufen-ethyl, saflufenacil, and sulfentrazone;

d5) from the group of the bleacher herbicides:

aclonifen, beflubutamid, benzobicyclon, clomazone, diflufenican, flurochloridone, flurtamone, isoxaflutole, mesotrione, norflurazon, picolinafen, pyrasulfotole, pyrazolynate, sulcotrione, tefuryltrione, tembotrione, topramezone, bicyclopyrone, amitrole and flumeturon;

d6) from the group of the EPSP synthase inhibitors:

glyphosate, glyphosate-isopropylammonium, glyphosate-potassium and glyphosatetrimesium (sulfosate);

d7) from the group of the glutamine synthase inhibitors:

glufosinate, glufosinate-P, glufosinate-ammonium;

d8) from the group of the DHP synthase inhibitors: asulam;

d9) from the group of the mitosis inhibitors:

benfluralin, dithiopyr, ethalfluralin, oryzalin, pendimethalin, thiazopyr and trifluralin;

d10) from the group of the VLCFA inhibitors:

acetochlor, alachlor, anilofos, butachlor, cafenstrole, fentrazamide, flufenacet, mefenacet, metolachlor, S-metolachlor, naproanilide, napropamide, pretilachlor, fenoxasulfone, ipfencarbazone, pyroxasulfone and thenylchlor;

d11) from the group of the cellulose biosynthesis inhibitors: dichlobenil, flupoxam,and isoxaben;

d12) from the group of the auxinic herbicides:

2,4-D and its salts and esters, aminopyralid and its salts such as aminopyralid-tris(2-hydroxypropyl)ammonium and its esters, clopyralid and its salts and esters, dicamba and its salts and esters, dichlorprop-P and its salts and esters, fluroxypyr-meptyl, MCPA and its salts and esters, MCPB and its salts and esters, mecoprop-P and

its salts and esters, picloram and its salts and esters, quinclorac, quinmerac, triclopyr and its salts and esters, and aminocyclopyrachlor and its salts and esters;

d13) from the group of the auxin transport inhibitors: diflufenzopyr and diflufenzopyr-sodium;

d14) from the group of the other herbicides: bromobutide, cinmethylin, cumyluron, dalapon, difenzoquat, difenzoquat-metilsulfate, DSMA, dymron (= daimuron), flamprop, flamprop-isopropyl, flamprop-methyl, flamprop-M-isopropyl, flamprop-M-methyl, indanofan, indaziflam, metam, methylbromide, MSMA, oxaziclomefone, pyributicarb, triaziflam, tridiphane and 6-chloro-3-(2-cyclopropyl-6-methylphenoxy)-4-pyridazinol (CAS 499223-49-3) and its salts and esters.

Suitable safeners, which can be used in the compositions according to the present invention are known in the art, e.g. from The Compendium of Pesticide Common Names (http://www.alanwood.net/pesticides/); Farm Chemicals Handbook 2000 Vol. 86, Meister Publishing Company, 2000; B. Hock, C. Fedtke, R. R. Schmidt, Herbizide, Georg Thieme Verlag, Stuttgart 1995; W. H. Ahrens, Herbicide Handbook, 7th Edition, Weed Science Society of America, 1994; and K. K. Hatzios, Herbicide Handbook, Supplement to 7th Edition, Weed Science Society of America, 1998.

Examples of preferred safeners are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

Especially preferred safeners are benoxacor, cloquintocet, cyprosulfamide, dichlormid, fenchlorazole, fenclorim, flurazole, fluxofenim, furilazole, isoxadifen, mefenpyr, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

Particularly preferred safeners are benoxacor, cloquintocet, cyprosulfamide, dichlormid, fenchlorazole, fenclorim, furilazole, isoxadifen, mefenpyr, naphtalic anhydride, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

In one embodiment, the compositions according to the invention preferably comprise at least one of the safener compounds selected from the group of benoxacor, dichlormid and furilazole.

In a particular preferred embodiment of the invention, the compositions of the invention comprise as a safener benoxacor.

In another particular preferred embodiment of the invention, the compositions of the invention comprise as a safener dichlormid.

In a further particular preferred embodiment of the invention, the compositions of the invention comprise as a safener furilazole.

Particular preferred examples of compositions according to the invention are given in the following tables A to F. In the compositions according to tables A to F, the weight ratios of the compounds A, B, C and D are as defined above.

Table A:

| # | compos. comprising (A) metazachlor+ (B) dimethenamid+ (C) pethoxamid | + further herbicide D) |
|---|---|---|
| A1 | A+B+C | amitrole |
| A2 | A+B+C | asulam |
| A3 | A+B+C | carbetamid |
| A4 | A+B+C | chlorpropham |
| A5 | A+B+C | orbencarb |
| A6 | A+B+C | 5 (propyzamid) |
| A7 | A+B+C | propham |
| A8 | A+B+C | tiocarbazil, |
| A9 | A+B+C | pronamid |
| A10 | A+B+C | benazolin |

(continued)

| # | compos. comprising (A) metazachlor+ (B) dimethenamid+ (C) pethoxamid | + further herbicide D) |
|---|---|---|
| A11 | A+B+C | benzofenap |
| A12 | A+B+C | isoxachlortole |
| A13 | A+B+C | isoxaflutole |
| A14 | A+B+C | ketospiradox |
| A15 | A+B+C | mesotrione |
| A16 | A+B+C | pyrasulfotole |
| A17 | A+B+C | pyrazolynate |
| A18 | A+B+C | pyrazoxyfen |
| A19 | A+B+C | sulcotrione |
| A20 | A+B+C | tembotrione |
| A21 | A+B+C | topramezone |
| A22 | A+B+C | imazamox |
| A23 | A+B+C | imazapic |
| A24 | A+B+C | imazapyr |
| A25 | A+B+C | imazaquin |
| A26 | A+B+C | imazethapyr |
| A27 | A+B+C | bispyribac-Na |
| A28 | A+B+C | pyiminobac-methyl |
| A29 | A+B+C | pyribenzoxim |
| A30 | A+B+C | pyriftalid |
| A31 | A+B+C | pyrithiobac-Na |
| A32 | A+B+C | flucarbazone-Na |
| A33 | A+B+C | propoxycarbazone-Na |
| A34 | A+B+C | amidosulfuron |
| A35 | A+B+C | azimsulfuron |
| A36 | A+B+C | bensulfuron-methyl |
| A37 | A+B+C | chlorimuron-ethyl |
| A38 | A+B+C | chlorsulfuron |
| A39 | A+B+C | cinosulfuron |
| A40 | A+B+C | cyclosulfamuron |
| A41 | A+B+C | ethametsulfuron-methyl |
| A42 | A+B+C | flazasulfuron |
| A43 | A+B+C | flupyrsulfuron-methyl |
| A44 | A+B+C | foramsulfuron |
| A45 | A+B+C | halosulfuron-methyl |
| A46 | A+B+C | imazosulfuron |
| A47 | A+B+C | iodosulfuron |
| A48 | A+B+C | mesosulfuron |

(continued)

| # | compos. comprising (A) metazachlor+ (B) dimethenamid+ (C) pethoxamid | + further herbicide D) |
|---|---|---|
| A49 | A+B+C | metsulfuron-methyl |
| A50 | A+B+C | nicosulfuron |
| A51 | A+B+C | oxasulfuron |
| A52 | A+B+C | primisulfuron-methyl |
| A53 | A+B+C | prosulfuron |
| A54 | A+B+C | pyrasosulfuron-ethyl |
| A55 | A+B+C | rimsulfuron |
| A56 | A+B+C | sulfometuron-methyl |
| A57 | A+B+C | sulfosulfuron |
| A58 | A+B+C | thifensulfuron-methyl |
| A59 | A+B+C | triasulfuron |
| A60 | A+B+C | tribenuron-methyl |
| A61 | A+B+C | trifloxysulfuron |
| A62 | A+B+C | triflusulfuron-methyl |
| A63 | A+B+C | tritosulfuron |
| A64 | A+B+C | cloransulam-methyl |
| A65 | A+B+C | diclosulam |
| A66 | A+B+C | florasulam |
| A67 | A+B+C | flumetsulam |
| A68 | A+B+C | metosulam |
| A69 | A+B+C | penoxsulam |
| A70 | A+B+C | pyroxsulam |
| A71 | A+B+C | 2,4-D |
| A72 | A+B+C | glufosinate |
| A73 | A+B+C | clomazone |
| A74 | A+B+C | dimethachlor |
| A75 | A+B+C | glyphosate |
| A76 | A+B+C | propyzamid |
| A77 | A+B+C | benefin |
| A78 | A+B+C | benfluralin |
| A79 | A+B+C | butralin |
| A80 | A+B+C | ethalfluralin |
| A81 | A+B+C | oryzalin |
| A82 | A+B+C | trifluralin |
| A83 | A+B+C | thiazopyr |
| A84 | A+B+C | carbetamid |
| A85 | A+B+C | fluridone |
| A86 | A+B+C | flurochloridone |

(continued)

| # | compos. comprising (A) metazachlor+ (B) dimethenamid+ (C) pethoxamid | + further herbicide D) |
|---|---|---|
| A87 | A+B+C | flurtamone |
| A88 | A+B+C | norflurazon |
| A89 | A+B+C | picolinafen |
| A90 | A+B+C | diflufenican |
| A91 | A+B+C | acifluorfen-sodium |
| A92 | A+B+C | bifenox |
| A93 | A+B+C | ethoxyfen |
| A94 | A+B+C | fomesafen |
| A95 | A+B+C | lactofen |
| A96 | A+B+C | nitrofluorfen |
| A97 | A+B+C | cinidon-ethyl |
| A98 | A+B+C | flumiclorac-pentyl |
| A99 | A+B+C | flumioxazin |
| A100 | A+B+C | oxadiargyl |
| A101 | A+B+C | oxadiazon |
| A102 | A+B+C | butafenacil |
| A103 | A+B+C | saflufenacil |
| A104 | A+B+C | fluthiacet-methyl |
| A105 | A+B+C | thidiazimin |
| A106 | A+B+C | azafenidin |
| A107 | A+B+C | carfentrazone-ethyl |
| A108 | A+B+C | sulfentrazone |
| A109 | A+B+C | quizalofop-Pmethyl |
| A110 | A+B+C | fluazifop-P-butyl |
| A111 | A+B+C | haloxyfop-P-methyl |
| A112 | A+B+C | propaquizafop |
| A113 | A+B+C | clethodim |
| A114 | A+B+C | cycloxydim |
| A115 | A+B+C | profoxydim |
| A116 | A+B+C | sethoxydim |
| A117 | A+B+C | tepraloxydim |
| A118 | A+B+C | dinitramin |
| A119 | A+B+C | fluchloralin |
| A120 | A+B+C | pendimethalin |
| A121 | A+B+C | chlornitrofen |
| A122 | A+B+C | fluoroglycofen-ethyl |
| A123 | A+B+C | furyloxyfen |
| A124 | A+B+C | nitrofen |

(continued)

| # | compos. comprising (A) metazachlor+ (B) dimethenamid+ (C) pethoxamid | + further herbicide D) |
|---|---|---|
| A125 | A+B+C | oxyfluorfen |
| A126 | A+B+C | clopyralid |
| A127 | A+B+C | picloram |
| A128 | A+B+C | quinclorac |
| A129 | A+B+C | quinmerac |
| A130 | A+B+C | aminopyralid |

Table B:
Compositions B1-B130, which differ from the compositions A1-A130, in that component A of the composition is metazachlor in its triclinic form. Table C:
Compositions C1-C130, which differ from the compositions A1-A130, in that component A of the composition is metazachlor in its monoclinic form.
Table D:
Compositions D1-D130, which differ from the compositions A1-A130, in that component A of the composition is a mixture of the monoclinic and triclinic forms of metazachlor.
Table E:
Compositions E1-E130, which differ from the compositions A1-A130, in that component B of the composition is dimethenamid-P.
Table F:
Compositions F1-F130, which differ from the compositions A1-A130, in that component A of the composition is metazachlor in its monoclinic form and component B of the composition is dimethenamid-P.

The compositions of the present invention are suitable for controlling a large number of harmful plants, including monocotyledonous weeds and dicotyledonous weeds. They are in particular for controlling annual weeds such as gramineous weeds (grasses) including *Echinochloa* species such as barnyardgrass (*Echinochloa crusgalli var. crusgalli*), *Digitaria* species such as crabgrass (*Digitaria sanguinalis*), *Setaria* species such as green foxtail (*Setaria viridis*) and giant foxtail (*Setaria faberii*), *Sorghum* species such as johnsongrass (*Sorghum halepense Pers*.), *Avena* species such as wild oats (*Avena fatua*), *Cenchrus* species such as *Cenchrus echinatus, Bromus* species such as *Bromus arvensis, Bromus secalinus, Bromus sterilis, Bromus inermis, Bromus commutatus, Bromus mollus*, *Lolium* species, *Phalaris* species, *Eriochloa* species, *Panicum* species, *Brachiaria* species, annual bluegrass (*Poa annua*), blackgrass (*Alopecurus myosuroides), Aegilops cylindrica, Agropyron repens, Apera spica-venti, Eleusine indica, Cynodon dactylon* and the like. The compositions of the present invention are also suitable for controlling a large number of dicotyledonous weeds, in particular broad leaf weeds including particular broadleaf weeds including *Polygonum* species such as wild buckwheat (*Polygonum convolvolus*), *Amaranthus* species such as pig-weed *(Amaranthus retroflexus*), *Chenopodium* species such as common lambsquarters *(Chenopodium album* L.), *Sida species* such as prickly sida (*Sida spinosa* L.), *Ambrosia* species such as common ragweed *(Ambrosia artemisiifolia), Acanthospermum* species, *Anthemis* species, Matricaria species such as *matricaria chamomilla, matricaria discoide, matricaria inodora, Atriplex* species, *Cirsium* species, *Convolvulus* species, *Conyza* species such as horseweed *(Conyza canadensis), Cassia* species, *Commelina* species, *Datura* species, *Euphorbia* species, *Geranium* species such as *Geranium dissectum, Geranium pusillium, Geranium rotundifoium, Galinsoga* species, morning-glory (*Ipomoea* species), *Lamium* species, *Malva* species, *Matricaria* species, *Sysimbrium* species, *Solanum* species, *Xanthium* species, *Veronica* species, *Viola* species, common chickweed (*Stellaria media*), velvetleaf (*Abutilon theophrasti*), Hemp sesbania (*Sesbania exaltata* Cory), *Anoda cristata, Bidens pilosa, Centaurea cyanus, Galeopsis tetrahit, Galium aparine, Helianthus annuus, Desmodium tortuosum, Kochia scoparia, Mercurialis annua, Myosotis arvensis, Papaver rhoeas, Salsola kali, Sonchus arvensis, Tagetes minuta, Richardia brasiliensis,* cruciferous weeds such as *Raphanus raphanistrum, Sinapis arvensis, Thlaspi arvense, Descurainia Sophia, Capsella bursapastoris, Sisymbrium officinale, Brassica kaber, volunteer cereals such as Triticum aestivum, Hordeum vulgare, Secale cereale, Avena sativa, Triticale.*

The compositions of the present invention are particularly useful for controlling persistent grass weeds. Examples for persistent weeds are *Bromus* species, *Lolium* species, *Alopecurus* species.

The compositions of the present invention are also particularly useful for controlling weeds, which have a probability of developing resistance to herbicides. Examples for such weeds are grass species such as *Bromus* species, *Lolium* species, *Alopecurus myosuroides,* and broadleaf species such as cruciferous weeds, *Geranium* species, *Matricharia* species.

The compositions of the present invention are suitable for combating/controlling undesired vegetation in crops, in particular in oilseed rape and corn. Less crop damage is observed in comparison to treatment with equivalent amounts of the individual compounds.

If not stated otherwise, the compositions of the invention are suitable for application in any variety of the aforementioned crop plants.

The compositions according to the invention can also be used in crop plants that have been modified by breeding, mutagenesis or genetic engineering, e.g. have been rendered tolerant to applications of specific classes of herbicides, such as auxinic herbicides such as dicamba or 2,4-D; bleacher herbicides such as 4-hydroxyphenylpyruvate dioxygenase (HPPD) inhibitors or phytoene desaturase (PDS) inhibitors; acetolactate synthase (ALS) inhibitors such as sulfonylureas or imidazolinones; enolpyruvyl shikimate 3-phosphate synthase (EPSP) inhibitors such as glyphosate; glutamine synthetase (GS) inhibitors such as glufosinate; protoporphyrinogen-IX oxidase inhibitors; lipid biosynthesis inhibitors such as acetylCoA carboxylase (ACCase) inhibitors; or oxynil (i. e. bromoxynil or ioxynil) herbicides as a result of conventional methods of breeding or genetic engineering; furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxinic herbicides, or ACCase inhibitors. These herbicide resistance technologies are, for example, described in Pest Management Science 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein. Several cultivated plants have been rendered tolerant to herbicides by mutgenesis and conventional methods of breeding, e. g., Clearfield® summer rape (Canola, BASF SE, Germany) being tolerant to imidazolinones, e. g., imazamox, or ExpressSun® sunflowers (DuPont, USA) being tolerant to sulfonyl ureas, e. g., tribenuron. Genetic engineering methods have been used to render cultivated plants such as soybean, cotton, corn, beets and rape, tolerant to herbicides such as glyphosate, imidazolinones and glufosinate, some of which are under development or commercially available under the brands or trade names RoundupReady® (glyphosate tolerant, Monsanto, USA), Cultivance® (imidazolinone tolerant, BASF SE, Germany) and LibertyLink® (glufosinate tolerant, Bayer CropScience, Germany).

The compositions according to the invention can also be used in genetically modified crop plants. The term "genetically modified plants" is to be understood as plants whose genetic material has been modified by the use of recombinant DNA techniques to include an inserted sequence of DNA that is not native to that plant species' genome or to exhibit a deletion of DNA that was native to that species' genome, wherein the modification(s) cannot readily be obtained by cross breeding, mutagenesis or natural recombination alone. Often, a particular genetically modified plant will be one that has obtained its genetic modification(s) by inheritance through a natural breeding or propagation process from an ancestral plant whose genome was the one directly treated by use of a recombinant DNA technique. Typically, one or more genes have been integrated into the genetic material of a genetically modified plant in order to improve certain properties of the plant. Such genetic modifications also include but are not limited to targeted post-translational modification of protein(s), oligo- or polypeptides. e. g., by inclusion therein of amino acid mutation(s) that permit, decrease, or promote glycosylation or polymer additions such as prenylation, acetylation farnesylation, or PEG moiety attachment.

The compositions according to the invention can also be used in crop plants that have been modified, e.g. by the use of recombinant DNA techniques to be capable of synthesizing one or more insecticidal proteins, especially those known from the bacterial genus Bacillus, particularly from Bacillus thuringiensis, such as delta-endotoxins, e. g., CryIA(b), CryIA(c), CryIF, CryIF(a2), CryIIA(b), CryIIIA, CryIIIB(b1) or Cry9c; vegetative insecticidal proteins (VIP), e. g., VIP1, VIP2, VIP3 or VIP3A; insecticidal proteins of bacteria colonizing nematodes, e. g., Photorhabdus spp. or Xenorhabdus spp.; toxins produced by animals, such as scorpion toxins, arachnid toxins, wasp toxins, or other insect-specific neurotoxins; toxins produced by fungi, such as Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilbene synthase, bibenzyl synthase, chitinases or glucanases. In the context of the present invention these insecticidal proteins or toxins are to be understood expressly also as including pre-toxins, hybrid proteins, truncated or otherwise modified proteins. Hybrid proteins are characterized by a new combination of protein domains, (see, e. g., WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g., in the publications mentioned above. These insecticidal proteins contained in the genetically modified plants impart to the plants producing these proteins tolerance to harmful pests from all taxonomic groups of arthropods, especially to beetles (Coleoptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially

available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g., Agrisure® CB) and Bt176 from Syngenta Seeds SAS, France, (corn cultivars producing the Cry1Ab toxin and PAT enzyme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1 F toxin and PAT enzyme).

The compositions according to the invention can also be used in crop plants that have been modified, e.g. by the use of recombinant DNA techniques to be capable of synthesizing one or more proteins to increase the resistance or tolerance of those plants to bacterial, viral or fungal pathogens. Examples of such proteins are the so-called "pathogenesis-related proteins" (PR proteins, see, e.g., EP-A 392 225), plant disease resistance genes (e. g., potato cultivars, which express resistance genes acting against Phytophthora infestans derived from the Mexican wild potato, Solanum bulbocastanum) or T4-lysozym (e.g., potato cultivars capable of synthesizing these proteins with increased resistance against bacteria such as Erwinia amylovora). The methods for producing such genetically modified plants are generally known to the person skilled in the art and are described, e.g., in the publications mentioned above.

The compositions according to the invention can also be used in crop plants that have been modified, e.g. by the use of recombinant DNA techniques to be capable of synthesizing one or more proteins to increase the productivity (e.g., bio-mass production, grain yield, starch content, oil content or protein content), tolerance to drought, salinity or other growth-limiting environmental factors or tolerance to pests and fungal, bacterial or viral pathogens of those plants.

The compositions according to the invention can also be used in crop plants that have been modified, e.g. by the use of recombinant DNA techniques to be capable of producing an increased amount of ingredients or new ingredients, which are suitable to improve human or animal nutrition, e. g., oil crops that produce health-promoting long-chain omega-3 fatty acids or unsaturated omega-9 fatty acids (e. g., Nexera® rape, Dow AgroSciences, Canada).

The compositions of the present invention can be applied in a conventional manner by a skilled personal familiar with the techniques of applying herbicides. Suitable techniques include spraying, atomizing, dusting, spreading or watering. The type of application depends on the intended purpose in a well known manner; in any case, they should ensure the finest possible distribution of the active ingredients according to the invention.

The compositions can be applied pre- or post-emergence, i.e. before, during and/or after emergence of the undesirable plants. When the compositions are used in crops, they can be applied after seeding and before or after the emergence of the crop plants. The compositions invention can, however, also be applied prior to seeding of the crop plants.

It is a particular benefit of the compositions according to the invention that they have a very good post-emergence herbicide activity, i.e. they show a good herbicidal activity against emerged undesirable plants. Thus, in a preferred embodiment of invention, the compositions are applied post-emergence, i.e. during and/or after, the emergence of the undesirable plants. It is particularly advantageous to apply the mixtures according to the invention post emergent when the undesirable plant starts with leaf development up to flowering. Since the compositions of the present invention show good crop tolerance, even when the crop has already emerged, they can be applied after seeding of the crop plants and in particular during or after the emergence of the crop plants.

In any case herbicide compound A, the compound B and the compound C and, if desired, herbicide component D and/or safener E, can be applied simultaneously or in succession.

The compositions are applied to the plants mainly by spraying, in particular foliar spraying. Application can be carried out by customary spraying techniques using, for example, water as carrier and spray liquor rates of 10 to 2000 l/ha or 50 to 1000 l/ha (for example from 100 to 500l/ha). Application of the herbicidal compositions by the low-volume and the ultra-low-volume method is possible, as is their application in the form of microgranules.

In the case of a post-emergence treatment of the plants, the herbicidal mixtures or compositions according to the invention are preferably applied by foliar application. Application may be effected, for example, by usual spraying techniques with water as the carrier, using amounts of spray mixture of approx. 50 to 1000 l/ha.

In the method of the invention, the application rate of the herbicide compound A (metazachlor) is from generally from 300 to 1500 g/ha and in particular from 300 to 750 g/ha.

In the method of the invention, the application rate of the herbicide compound B (dimethenamid) is generally from 300 to 1000 g/ha and in particular from 300 to 700 g/ha.

In the method of the invention, the application rate of the herbicide compound C (pethoxamid) is generally from 300 to 1600 g/ha and in particular from 300 to 700 g/ha.

In the method of the invention, the application rate of the further herbicide compound D (in case of salts calculated as the acid) is generally from 1 to 2500 g/ha and in particular from 5 to 1000 g/ha.

In the method of the invention, the application rate of the herbicide safener compound E (in case of salts calculated as the acid) is generally from 1 to 1500 g/ha, preferably from 5 to 500 g/ha.

The present invention also relates to formulations of the compositions according to the present invention. The formulations contain, besides the composition, at least one organic or inorganic carrier material. The formulations may also contain, if desired, one or more surfactants and, if desired, one or more further auxiliaries customary for crop protection compositions.

The formulation may be in the form of a single package formulation containing the herbicide compound A, the herbicide compound B, the herbicide compound C, and, if desired further herbicide D, and/or herbicide safener compound E together with liquid and/or solid carrier materials, and, if desired, one or more surfactants and, if desired, one or more further auxiliaries customary for crop protection compositions. The formulation may be in the form of a two package formulation, wherein one package contains a formulation of herbicide compound A and herbicide compound B (i.e. metazachlor+dimethenamid) while the other package contains a formulation of pethoxamid and, if desired further herbicide compound D and/or herbicide safener compound E, and wherein both formulations contain at least one carrier material, if desired, one or more surfactants and, if desired, one or more further auxiliaries customary for crop protection compositions. The formulation may also be in the form of a two package formulation, wherein one package contains a formulation of herbicide compound A and herbicide compound B (i.e. metazachlor+dimethenamid) and optionally the herbicide safener compound E, while the other package contains a formulation of the the herbicide compound C (pethoxamid) and, if desire, further herbicide compound D, and wherein both formulations contain at least one carrier material, if desired, one or more surfactants and, if desired, one or more further auxiliaries customary for crop protection compositions. In the case of two package formulations the two formulations are preferably mixed prior to application. Preferably the mixing is performed as a tank mix, i.e. the formulations are mixed immediately prior or upon dilution with water.

In the formulation of the present invention the active ingredients, i.e. herbicide compound A, herbicide compound B. and herbicide compound C and optional further actives (e.g. herbicide safener E and/or further herbicide compound D) are present in suspended, emulsified or dissolved form. The formulation according to the invention can be in the form of aqueous solutions, powders, suspensions, also highly-concentrated aqueous, oily or other suspensions or dispersions, aqueous emulsions, aqueous microemulsions, aqueous suspo-emulsions, oil dispersions, pastes, dusts, materials for spreading or granules.

Depending on the formulation type, they comprise one or more liquid or solid carriers, if appropriate surfactants (such as dispersants, protective colloids, emulsifiers, wetting agents and tackifiers), and if appropriate further auxiliaries which are customary for formulating crop protection products. The person skilled in the art is sufficiently familiar with the recipes for such formulations. Further auxiliaries include e.g. organic and inorganic thickeners, bactericides, antifreeze agents, antifoams, colorants and, for seed formulations, adhesives.

Suitable carriers include liquid and solid carriers. Liquid carriers include e.g. nonaqueous solvents such as cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water as well as mixtures thereof. Solid carriers include e.g. mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

Suitable surfactants (adjuvants, wetting agents, tackifiers, dispersants and also emulsifiers) are the alkali metal salts, alkaline earth metal salts and ammonium salts of aromatic sulfonic acids, for example lignosulfonic acids (e.g. Borrespers-types, Borregaard), phenolsulfonic acids, naphthalenesulfonic acids (Morwet types, Akzo Nobel) and dibutylnaphthalenesulfonic acid (Nekal types, BASF SE), and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl or tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors and proteins, denaturated proteins, polysaccharides (e.g. methylcellulose), hydrophobically modified starches, polyvinyl alcohol (Mowiol types Clariant), polycarboxylates (BASF SE, Sokalan types), polyalkoxylates, polyvinylamine (BASF SE, Lupamine types), polyethyleneimine (BASF SE, Lupasol types), polyvinylpyrrolidone and copolymers thereof.

Examples of thickeners (i.e. compounds which impart to the formulation modified flow properties, i.e. high viscosity in the state of rest and low viscosity in motion) are polysaccharides, such as xanthan gum (Kelzan® from Kelco), Rhodopol® 23 (Rhone Poulenc) or Veegum® (from R.T. Vanderbilt), and also organic and inorganic sheet minerals, such as Attaclay® (from Engelhardt).

Examples of antifoams are silicone emulsions (such as, for example, Silikon® SRE, Wacker or Rhodorsil® from Rhodia), long-chain alcohols, fatty acids, salts of fatty acids, organofluorine compounds and mixtures thereof.

Bactericides can be added for stabilizing the aqueous herbicidal formulations. Examples of bactericides are bactericides based on diclorophen and benzyl alcohol hemiformal (Proxel® from ICI or Acticide® RS from Thor Chemie and Kathon® MK from Rohm & Haas), and also isothiazolinone derivates, such as alkylisothiazolinones and benzisothiazolinones (Acticide MBS from Thor Chemie).

Examples of antifreeze agents are ethylene glycol, propylene glycol, urea or glycerol.

Examples of colorants are both sparingly water-soluble pigments and water-soluble dyes. Examples which may be mentioned are the dyes known under the names Rhodamin B, C.I. Pigment Red 112 and C.I. Solvent Red 1, and also pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of adhesives are polyvinylpyrrolidone, polyvinyl acetate, polyvinyl alcohol and tylose.

To prepare emulsions, pastes or oil dispersions, the active the components, as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Powders, materials for spreading and dusts can be prepared by mixing or concomitant grinding of the active the components A and B and optionally safener C and optionally herbicide D with a solid carrier.

Granules, e.g. coated granules, impregnated granules and homogeneous granules, can be prepared by binding the active ingredients to solid carriers.

The formulations of the invention comprise a herbicidally effective amount of the composition of the present invention. The concentrations of the active ingredients in the formulations can be varied within wide ranges. In general, the formulations comprise from 1 to 98% by weight, preferably 10 to 60% by weight, of active ingredients (sum of herbicide compounds, A, B, and C and optionally further active compounds). The active ingredients are employed in a purity of from 90% to 100%, preferably 95% to 100% (according to NMR spectrum).

The active herbicide compounds A and B as well as the compositions according to the invention can, for example, be formulated as follows:

1. Products for dilution with water

A Water-soluble concentrates

10 parts by weight of active compound (or composition) are dissolved in 90 parts by weight of water or a water-soluble solvent. As an alternative, wetters or other adjuvants are added. The active compound dissolves upon dilution with water. This gives a formulation with an active compound content of 10% by weight.

B Dispersible concentrates

20 parts by weight of active compound (or composition) are dissolved in 70 parts by weight of cyclohexanone with addition of 10 parts by weight of a dispersant, for example polyvinylpyrrolidone. Dilution with water gives a dispersion. The active compound content is 20% by weight.

C Emulsifiable concentrates

15 parts by weight of active compound (or composition) are dissolved in 75 parts by weight of an organic solvent (e.g. alkylaromatics) with addition of calcium dodecylbenzenesulfonate and castor oil ethoxylate (in each case 5 parts by weight). Dilution with water gives an emulsion. The formulation has an active compound content of 15% by weight.

D Emulsions

25 parts by weight of active compound (or composition) are dissolved in 35 parts by weight of an organic solvent (e.g. alkylaromatics) with addition of calcium dodecylbenzenesulfonate and castor oil ethoxylate (in each case 5 parts by weight). This mixture is introduced into 30 parts by weight of water by means of an emulsifier (Ultraturrax) and made into a homogeneous emulsion. Dilution with water gives an emulsion. The formulation has an active compound content of 25% by weight.

E Suspensions

In an agitated ball mill, 20 parts by weight of active compound (or composition) are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

F Water-dispersible granules and water-soluble granules

50 parts by weight of active compound (or composition) are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

G Water-dispersible powders and water-soluble powders

75 parts by weight of active compound (or composition) are ground in a rotor-stator mill with addition of 25 parts by weight of dispersants, wetters and silica gel. Dilution with water gives a stable dispersion or solution of the active compound. The active compound content of the formulation is 75% by weight.

H Gel formulations

In a ball mill, 20 parts by weight of active compound (or composition), 10 parts by weight of dispersant, 1 part by weight of gelling agent and 70 parts by weight of water or of an organic solvent are mixed to give a fine suspension. Dilution with water gives a stable suspension with active compound content of 20% by weight.

2. Products to be applied undiluted

I Dusts

5 parts by weight of active compound (or composition) are ground finely and mixed intimately with 95 parts by weight of finely divided kaolin. This gives a dusting powder with an active compound content of 5% by weight.

J Granules (GR, FG, GG, MG)

0.5 parts by weight of active compound (or composition) are ground finely and associated with 99.5 parts by weight of carriers. Current methods here are extrusion, spray-drying or the fluidized bed. This gives granules to be applied undiluted with an active compound content of 0.5% by weight.

K ULV solutions (UL)

10 parts by weight of active compound (or composition) are dissolved in 90 parts by weight of an organic solvent, for example xylene. This gives a product to be applied undiluted with an active compound content of 10% by weight.

Aqueous use forms can be prepared from emulsion concentrates, suspensions, pastes, wettable powders or water-dispersible granules by adding water.

It may furthermore be beneficial to apply the compositions of the invention alone or in combination with other herbicides, or else in the form of a mixture with other crop protection agents, for example together with agents for controlling pests or phytopathogenic fungi or bacteria. Also of interest is the miscibility with mineral salt solutions, which are employed for treating nutritional and trace element deficiencies. Other additives such as non-phytotoxic oils and oil concentrates may also be added.

Use Examples

Green house trial set up:

The effect of the herbicidal compositions according to the invention of herbicide compound A, herbicide compound B, and herbicide compound C and, if appropriate, herbicide safener compound E and/or further herbicide compound

D on the growth of undesirable plants compared to the herbicidally active compounds alone was demonstrated by the following greenhouse experiments:

The test plants have been seeded, separately for each species, in plastic containers in sandy loamy soil containing 5% organic matter.

For the herbicide treatments, metazachlor, dimethenamid-P and pethoxamid and, if appropriate, the herbicide safener compounds E and further herbicide compounds D, which had been suspended or emulsified in water, were applied by means of finely/evenly distributing spray nozzles. In all use examples, plants were grown in a greenhouse environment.

For the pre-emergence treatment, the active compounds, suspended or emulsified in water, were applied directly after sowing by means of finely distributing nozzles. The containers were irrigated gently to promote germination.

Depending on the species, the plants were kept at 10 - 25°C and 20 - 35°C, respectively. The test period extended over 1 to 4 weeks. During this time, the plants were tended and their response to the individual treatments was evaluated.

Field trial set up:

Field trials have been conducted at the mobile trial unit of BASF SE in Germany, Limburgerhof.

The trials have been set up in a randomised plot design. The test plot size was 3x10m.

The application of the test candidates was done in a pre-re emergence treatment. For the herbicide treatments, metazachlor, dimethenamid-P and pethoxamid which had been suspended or emulsified in water, were applied by means of finely/evenly distributing spray nozzles.

The herbicide compounds applied in the examples were used as commercially available formulations which have been diluted with tap water to a suitable concentration. Metazachlor (herbicide A) was used as a commercial suspension concentrate (Butisan® 500) having an active ingredient concentration of 500 g/l. Dimethenamid-P (herbicide B) was used as a commercial emulsion concentrate (Spectrum®) having an active ingredient concentration of 720 g/l.

Metazachlor and dimethenamid were also applied together in form of ready formulated emulsion concentrate (Springbok®) at a concentration of 400 g/l, i.e. the combination of metazachlor and dimethenamid-P was used as commercial emulsifiable concentrate (EC) having an active ingredient concentration of 200 g/l metazachlor and 200 g/l dimethenamid-P.

Pethoxamid (herbicide C) was used as a commercial emulsion concentrate (Successor®) having an active ingredient concentration of 600 g/l or alternatively as an emulsifiable concentrate (EC) having an active ingredient concentration of 600 g/l (Quantum®).

The evaluation for the damage caused by the chemical compositions was carried out using a scale from 0 to 100%, compared to the untreated control plants. Here, 0 means no damage and 100 means complete destruction of the plants.

Different grass weed and broad leaf weeds species as well as oilseed rape and corn have been tested.

| | |
|---|---|
| ALOMY | Alopecurus myosuroides |
| LOLMU | Lolium multiflorum |
| PAPRH | Papaver rhoeas |
| SINAL | Sinapis alba |

Colby's formula was applied to determine whether the composition showed synergistic action: S. R. Colby (1967) "Calculating synergistic and antagonistic responses of herbicide combinations", Weeds 15, p. 22 ff.

$$E = X + Y - (X \cdot Y/100)$$

where X = effect in percent using herbicide A at an application rate a;
Y = effect in percent using herbicide B at application rate b;
E = expected effect (in %) of A + B at application rates a + b.

For mixtures of three individual herbicide compounds a modified Colby formula can be used:

$$E = X + Y + Z - [(X \cdot Y + X \cdot Z + Y \cdot Z) / 100] - X \cdot Z \cdot Y \cdot Z / 10000$$

where E, X and Y are as defined above and Z is the herbicide effect in percent using herbicide compound C at an application rate c.

The value E corresponds to the effect (plant damage or injury) which is to be expected if the activity of the individual compounds is just additive. If the observed effect is higher than the value E calculated according to Colby, a synergistic effect is present.

Table 1: The Pre-emergence treatment was applied by means of fine distributed nozzels at the growth stage (GS/ BBCH 01-09). The performance of the applied herbicides Springbok® and Quantum® as well as the tank mixture of Springbok® and Quantum® has been assessed in winter oilseed rape field trials.

| | solo | | | | combination | | | |
|---|---|---|---|---|---|---|---|---|
| | Springbok® (metazachlor + dimethenamid-P) | | Quantum® (pethoxamid) | | Springbok® + Quantum® ((metazachlor + dimethenamid-P) + pethoxamid) | | | |
| | appl. rate [g/ha] | activity [%] | appl. rate [g/ha] | activity [%] | appl. rate [g/ha] | activity [%] | exp. act. [%]+ | syn. |
| field trial I: DAT*: 85 | | | | | | | | |
| ALOMY | 1000 | 98 | 500 | 78 | 1000+500 | 100 | 99,6 | Y |
| SINAL | 1000 | 82 | 500 | 13 | 1000+500 | 95 | 84,3 | Y |
| field trial II: DAT*: 85 | | | | | | | | |
| ALOMY | 1000 | 97 | 500 | 17 | 1000+500 | 100 | 97,5 | Y |
| LOLMU | 1000 | 97 | 500 | 32 | 1000+500 | 100 | 98 | Y |
| PAPRH | 1000 | 95 | 500 | 67 | 1000+500 | 99 | 98,3 | Y |
| SINAL | 1000 | 77 | 500 | 0 | 1000+500 | 85 | 77 | Y |
| application rate is given in g a.i./ ha;<br>DAT*: days after treatment;<br>[%]+: expected activity according to Colby, wherein the activity of Springbok® is calculated as activity of a single a.i.; | | | | | | | | |

## Claims

**1.** A herbicidal composition comprising:

a) a herbicide compound A, which is metazachlor; and
b) a second herbicide compound B, which is dimethenamid; and
c) a third herbicide compound C, which is pethoxamid.

**2.** The composition as claimed in claim 1, wherein compound A is metazachlor in its monoclinic form.

**3.** The composition as claimed in claim 1 or 2, wherein compound B is dimethenamid-P.

**4.** The composition as claimed in any one of the preceding claims, wherein the weight ratio of the herbicide compound A and the herbicide compound B is from 20:1 to 1:20.

**5.** The composition as claimed in any one of the preceding claims, wherein the weight ratio of the herbicide compound A and the herbicide compound C is from 20:1 to 1:20.

**6.** The composition as claimed in any one of the preceding claims, wherein the composition further comprises at least one further herbicide compound D selected from the group consisting of lipid biosynthesis inhibitors, acetolactate synthase (ALS) inhibitors, bleacher herbicides, EPSP synthase inhibitors, glutamine synthase inhibitors, mitosis

inhibitors, and auxinic herbicides.

**7.** The composition as claimed in any one of the preceding claims, wherein the composition further comprises at least one herbicide safener compound E.

**8.** The composition as claimed in claim 7, wherein the herbicide safener compound E is selected from benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane, 2,2,5-trimethyl-3-(dichloroacetyl)-1,3-oxazolidine and N-(2-Methoxybenzoyl)-4-[(methylaminocarbonyl)amino]-benzenesulfonamide, the salts and agriculturally acceptable derivatives thereof.

**9.** The use of the compositions as claimed in any one of the preceding claims for controlling undesirable vegetation.

**10.** The use as claimed in claim 9 for controlling undesirable vegetation in cultures of crop plants.

**11.** The use as claimed in claim 10, where the crop plant is oilseed rape or corn.

**12.** The use as claimed in any one of claims 9 to 11, where the weed to be controlled is selected from *Bromus* species, *Lolium* species and *Alopecurus* species.

**13.** A method for controlling undesirable vegetation, which comprises allowing a composition as claimed in any of claims 1 to 8 to act on plants to be controlled or their habitat.

**14.** The method as claimed in claim 13, which comprises applying the composition as claimed in claims 1 to 8 pre-emergence, during and/or post-emergence of the plants to be controlled, the herbicide compounds A, B and C, and optionally the at least one further herbicide compound D and/or herbicide safener compound E being applied simultaneously or in succession.

**15.** An herbicide formulation comprising a composition as claimed in any of claims 1 to 8 and at least one solid or liquid carrier.

**Patentansprüche**

**1.** Herbizide Zusammensetzung, die Folgendes umfasst:

a) eine Herbizidverbindung A, bei der es sich um Metazachlor handelt; und
b) eine zweite Herbizidverbindung B, bei der es sich um Dimethenamid handelt; und
c) eine dritte Herbizidverbindung C, bei der es sich um Pethoxamid handelt.

**2.** Zusammensetzung nach Anspruch 1, wobei es sich bei Verbindung A um Metazachlor in seiner monoklinen Form handelt.

**3.** Zusammensetzung nach Anspruch 1 oder 2, wobei es sich bei Verbindung B um Dimethenamid-P handelt.

**4.** Zusammensetzung nach einem der vorhergehenden Ansprüche, wobei das Gewichtsverhältnis der Herbizidverbindung A und der Herbizidverbindung B 20:1 bis 1:20 beträgt.

**5.** Zusammensetzung nach einem der vorhergehenden Ansprüche, wobei das Gewichtsverhältnis der Herbizidverbindung A und der Herbizidverbindung C 20:1 bis 1:20 beträgt.

**6.** Zusammensetzung nach einem der vorhergehenden Ansprüche, wobei die Zusammensetzung weiterhin mindestens eine weitere Herbizidverbindung D, ausgewählt aus der Gruppe bestehend aus Lipidbiosynthesehemmern, Acetolactatsynthase (ALS)-Hemmern, Bleacher-Herbiziden, EPSP-Synthasehemmern, Glutaminsynthasehemmern, Mitosehemmern und Auxinherbiziden, umfasst.

**7.** Zusammensetzung nach einem der vorhergehenden Ansprüche, wobei die Zusammensetzung weiterhin mindestens eine Herbizidsafenerverbindung E umfasst.

8. Zusammensetzung nach Anspruch 7, wobei die Herbizidsafenerverbindung E aus Benoxacor, Cloquintocet, Cyometrinil, Cyprosulfamid, Dichlormid, Dicyclonon, Dietholat, Fenchlorazol, Fenclorim, Flurazol, Fluxofenim, Furilazol, Isoxadifen, Mefenpyr, Mephenat, Naphtalinsäureanhydrid, Oxabetrinil, 4-(Dichloracetyl)-1-oxa-4-azaspiro[4.5]decan, 2,2,5-Trimethyl-3-(dichloracetyl)-1,3-oxazolidin und N-(2-Methoxybenzoyl)-4-[(methylaminocarbonyl)-amino]benzolsulfonamid und ihren Salzen und landwirtschaftlich unbedenklichen Derivaten ausgewählt ist.

9. Verwendung der Zusammensetzungen nach einem der vorhergehenden Ansprüche zum Bekämpfen von unerwünschtem Pflanzenwuchs.

10. Verwendung nach Anspruch 9, zum Bekämpfen von unerwünschtem Pflanzenwuchs in Kulturpflanzenbeständen.

11. Verwendung nach Anspruch 10, wobei es sich bei der Kulturpflanze um Raps oder Mais handelt.

12. Verwendung nach einem der Ansprüche 9 bis 11, wobei das zu bekämpfende Unkraut aus Bromus-Arten, *Lolium*-Arten und *Alopecurus*-Arten ausgewählt ist.

13. Verfahren zum Bekämpfen von unerwünschtem Pflanzenwuchs, bei dem man eine Zusammensetzung nach einem der Ansprüche 1 bis 8 auf zu bekämpfende Pflanzen oder ihren Lebensraum einwirken lässt.

14. Verfahren nach Anspruch 13, bei dem man die Zusammensetzung nach den Ansprüchen 1 bis 8 im Vorauflauf, während des Auflaufens und/oder im Nachauflauf der zu bekämpfenden Pflanzen ausbringt, wobei die Herbizidverbindungen A, B und C und gegebenenfalls die mindestens eine weitere Herbizidverbindung D und/oder Herbizidsafenerverbindung E gleichzeitig oder der Reihe nach ausgebracht werden.

15. Herbizidformulierung, die eine Zusammensetzung nach einem der Ansprüche 1 bis 8 und mindestens einen festen oder flüssigen Träger umfasst.

**Revendications**

1. Composition herbicide comprenant :

   a) un composé herbicide A, qui est le métazachlor ; et
   b) un deuxième composé herbicide B, qui est le diméthénamide ; et
   c) un troisième composé herbicide C, qui est le péthoxamide.

2. Composition selon la revendication 1, **caractérisée en ce que** le composé A est le métazachlor sous sa forme monoclinique.

3. Composition selon la revendication 1 ou 2, **caractérisée en ce que** le composé B est le diméthénamide-P.

4. Composition selon l'une quelconque des revendications précédentes, **caractérisée en ce que** le rapport pondéral du composé herbicide A au composé herbicide B va de 20:1 à 1:20.

5. Composition selon l'une quelconque des revendications précédentes, **caractérisée en ce que** le rapport pondéral du composé herbicide A au composé herbicide C va de 20:1 à 1:20.

6. Composition selon l'une quelconque des revendications précédentes, **caractérisée en ce que** la composition comprend en outre au moins un autre composé herbicide D choisi dans le groupe constitué par les inhibiteurs de la biosynthèse des lipides, les inhibiteurs de l'acétolactate synthase (ALS), les herbicides de blanchiment, les inhibiteurs de l'EPSP synthase, les inhibiteurs de la glutamine synthase, les inhibiteurs de la mitose, et les herbicides auxiniques.

7. Composition selon l'une quelconque des revendications précédentes, **caractérisée en ce que** la composition comprend en outre au moins un composé herbicide E de type phytoprotecteur.

8. Composition selon la revendication 7, **caractérisée en ce que** le composé herbicide E de type phytoprotecteur est choisi parmi le bénoxacor, le cloquintocet, le cyométrinil, le cyprosulfamide, le dichlormid, le dicyclonon, le diétholate, le fenchlorazole, le fenclorim, le flurazole, le fluxofénim, le furilazole, l'isoxadifen, le méfenpyr, le méphénate, l'anhydride naphtalique, l'oxabétrinil, le 4-(dichloroacétyl)-1-oxa-4-azaspiro[4.5]décane, la 2,2,5-triméthyl-3-(dichloroacétyl)-1,3-oxazolidine et le N-(2-méthoxybenzoyl)-4-[(méthylaminocarbonyl)-amino]benzènesulfonamide, les sels et les dérivés acceptables sur le plan agricole de celui-ci.

**9.** Utilisation des compositions selon l'une quelconque des revendications précédentes, pour le contrôle de végétation indésirable.

**10.** Utilisation selon la revendication 9, pour le contrôle de végétation indésirable dans des cultures de plantes cultivées.

**11.** Utilisation selon la revendication 10, **caractérisée en ce que** la plante cultivée est le colza ou le maïs.

**12.** Utilisation selon l'une quelconque des revendications 9 à 11, **caractérisée en ce que** l'adventice à contrôler est choisie parmi les espèces de *Bromus,* les espèces de *Lolium* et les espèces d'*Alopecurus.*

**13.** Méthode de contrôle de végétation indésirable, comprenant le fait de permettre à une composition selon l'une quelconque des revendications 1 à 8 d'agir sur des plantes à contrôler ou leur habitat.

**14.** Méthode selon la revendication 13, comprenant l'application de la composition selon les revendications 1 à 8 en pré-levée, pendant la levée et/ou en post-levée des plantes à contrôler, les composés herbicides A, B et C, et éventuellement le au moins un autre composé herbicide D et/ou le composé herbicide E de type phytoprotecteur étant appliqués simultanément ou en succession.

**15.** Formulation herbicide comprenant une composition selon l'une quelconque des revendications 1 à 8, et au moins un véhicule solide ou liquide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 411408 A
- US 4666502 A
- US 5457085 A
- EP 206251 A
- EP 1810570 A
- EP 1656021 A
- EP 2280602 A
- WO 2009133083 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A


### Non-patent literature cited in the description


- **U. J. GRIESSER ; D. WEIGAND ; J. M. ROLLINGER ; M. HADDOW ; E. GSTREIN.** *J. Therm. Anal. Calorim.,* 2004, vol. 77, 511
- **D. WEIGAND.** *Ph.D. thesis,* 2001
- The Compendium of Pesticide Common Names. Farm Chemicals Handbook. Meister Publishing Company, 2000, vol. 86
- **B. HOCK ; C. FEDTKE ; R. R. SCHMIDT.** Herbizide. Georg Thieme Verlag, 1995
- **W. H. AHRENS.** Herbicide Handbook. Weed Science Society of America, 1994
- **K. K. HATZIOS.** Herbicide Handbook. Weed Science Society of America, 1998
- *Pest Management Science,* 2005, vol. 61, 246
- *PEST MANAGEMENT SCIENCE,* 2005, vol. 61, 258
- *PEST MANAGEMENT SCIENCE,* 2005, vol. 61, 277
- *PEST MANAGEMENT SCIENCE,* 2005, vol. 61, 269
- *PEST MANAGEMENT SCIENCE,* 2005, vol. 61, 286
- *PEST MANAGEMENT SCIENCE,* 2008, vol. 64, 326
- *PEST MANAGEMENT SCIENCE,* 2008, vol. 64, 332
- *Weed Science,* 2009, vol. 57, 108
- *Australian Journal of Agricultural Research,* 2007, vol. 58, 708
- *Science,* 2007, vol. 316, 1185
- **S. R. COLBY.** Calculating synergistic and antagonistic responses of herbicide combinations. *Weeds,* 1967, vol. 15, 22 ff